# EUROPÄISCHE PATENTSCHRIFT

(11) **EP 2 087 336 B1**
(45) Veröffentlichungstag und Bekanntmachung des Hinweises auf die Patenterteilung: **10.01.2018**
(21) Anmeldenummer: 07820131.6
(22) Anmeldetag: 11.09.2007
(51) Int. Cl.: G01N 1/04, G01N 21/94, G01N 1/02, G01N 1/28

(54) **VERFAHREN ZUR ERKENNUNG VON VERUNREINIGUNGEN AUF EINER OBERFLÄCHE**
METHOD FOR THE DETECTION OF IMPURITIES ON A SURFACE
PROCÉDÉ DE RECONNAISSANCE D'IMPURETÉS SUR UNE SURFACE

(30) Priorität: 31.10.2006 DE 102006051313
(43) Veröffentlichungstag der Anmeldung: 12.08.2009
(73) Patentinhaber: Robert Bosch GmbH, 70442 Stuttgart (DE)
(72) Erfinder: BRINZ, Thomas, 73266 Bissingen A.d. Teck (DE); LEWIS, Jane, SA43 2SE Wales (DE); TIEFENBACHER, Markus, 70736 Fellbach-schmiden (DE); GEIGER, Thomas, 72141 Walddorfhaeslach (DE); BURK, Tobias, 72070 Tuebingen (DE); WAGNER, Eva, 67346 Speyer (DE); KOLTZENBURG, Sebastian, 67125 Dannstadt (DE); SCHROF, Wolfgang, 67271 Neuleiningen (DE)
(86) Internationale Anmeldenummer: PCT/EP2007/059526
(87) Internationale Veröffentlichungsnummer: WO 2008/052836

(56) Entgegenhaltungen:
- EP-A- 0 447 158
- WO-A-99/39176
- WO-A-2006/082446
- DE-A1- 3 019 341
- GB-A- 2 280 133
- US-A- 5 648 047
- US-B1- 6 449 035

## Beschreibung

### Stand der Technik

Die Erfindung betrifft ein Verfahren zur Erkennung von nicht vollständig ausgehärteten Beschichtungen auf einer Oberfläche nach Anspruch 1. Gezeigt wird auch eine Vorrichtung zur Durchführung des Verfahrens, die nicht zur Erfindung gehört. Zur Prüfung von chemischen, mechanischen und optischen Eigenschaften von Oberflächen. zum Beispiel von Lacken, werden Messgeräte häufig berührend aufgesetzt. Hierzu zählen zum Beispiel Farb- und Glanzmessgeräte, Schichtdickenmessgeräte und Härtemessgeräte.
Wenn auf einem Substrat eine Beschichtung aufgetragen ist. die nicht vollständig ausgehärtet ist, kann der Messkopf beim Aufsetzen mit der Beschichtung in Kontakt kommen. Hierdurch wird der Messkopf verschmutzt, weitere Messungen können verfälscht werden und die Verschmutzung kann auf nachfolgende Substrate verschleppt werden. Es ist sogar möglich, dass das Messgerät irreparabel beschädigt wird. Wenn der Messkopf mit einer nicht vollständig ausgehärteten Beschichtung in Kontakt gekommen ist, ist eine Reinigung des Messkopfes erforderlich. Ursache für nicht vollständig ausgehärtete Beschichtungen können zum Beispiel nicht optimierte Rezepturen, falsche Härtungsbedingungen oder Störungen in den Härtungsanlagen sein.
Weiterhin ist es auch möglich, dass Oberflächen bei der Handhabung und Lagerung der Objekte verkleben oder verschmutzen. Die Verschmutzungen können auch durch Handhabungssysteme oder Ablagesysteme wie Regale oder Racks usw. entstehen.
Übliche Schadensbilder unzureichend ausgehärteter Beschichtungen sind zum Beispiel flüssiges Beschichtungsmaterial, weiche oder schmierende Oberflächen oder eine feste, ausgehärtete Haut über weichem oder flüssigem Beschichtungsmaterial. Dabei ist es möglich, dass das Beschichtungsmaterial, die Oberfläche oder die feste, ausgehärtete Haut kleben oder nicht kleben.

Um den Trocknungszustand eines Lackes zu prüfen, werden im Labor im Allgemeinen einfache, manuelle Methoden verwendet. Zum Beispiel werden Glasperlen auf die Oberfläche gestreut oder es wird nach DIN 53150 Papier mit einem definierten Gewicht auf die Oberfläche gedrückt. Dabei wird geprüft, ob sich die Perlen beziehungsweise das Papier ohne Beschädigung der Beschichtung oder erhöhten Kraftaufwand entfernen lassen. Die Beschädigung der Beschichtung wird durch visuelle Beurteilung geprüft.

Bei einer weiteren üblichen im Labor eingesetzten Methode wird mit einem Fingernagel über die Oberfläche der Beschichtung gekratzt und das eventuell auftretende Schadensbild, zum Beispiel durch Kratzer oder Farbübertragung auf den Finger sowie Ablösen einer Haut von der Beschichtung, beurteilt. Hierdurch lässt sich auch eine feste Haut über flüssigem oder weichem, unvollständig ausgehärtetem Material erkennen. Dies ist insbesondere bei Lacken, die in Gegenwart von UV-Strahlung ausgehärtet werden, von Bedeutung.

Das Dokument WO 2006/082 446 A1 beschreibt eine Vorrichtung, die während des Mischvorgangs von Partikeln. Partikel unter Nutzung eines Klebebandes sammelt. Eine Kamera sichtet hierbei während des Sammelprozesses die auf dem Klebeband klebenden Partikel und überprüft beispielsweise deren Größe.

Das Dokument DE 30 19 341 A1 zeigt ein Verfahren zur Mengenmessung löslicher Substanzen wie Auftausalzen auf einer Fahrbahnoberfläche. Hierbei ist ein saugfähiges Papierband auf beiden Seiten mit wasserfester transparenter Folie umgeben, wobei in definierten Abständen Öffnungen in der Folie vorhanden sind, sodass das Papier den Flüssigkeitsfilm aufsaugen kann. Hierbei kann beispielsweise der Salzgehalt der Flüssigkeit bestimmt werden.

Das Dokument US 6 449 035 B1 zeigt ein Verfahren und eine Vorrichtung zur Detektion von Oberflächenpartikeln mittels eines Klebebandes.

Das Dokument US 5 648 047 zeigt eine Einrichtung zur kolorimetrischen Detektion von Explosivstoffen oder Narkotika.

Nachteil der eingesetzten Prüfungen ist jedoch, dass diese nicht ohne weiteres automatisierbar sind, zudem sind sie ungenau und vom Prüfer abhängig. In vielen Fällen wird auch nur eine grobe Beurteilung nach "in Ordnung" und "nicht in Ordnung" durchgeführt.

### Offenbarung der Erfindung

### Vorteile der Erfindung

Das erfindungsgemäße Verfahren zur Erkennung von nicht vollständig ausgehärteten Beschichtungen auf einer Oberfläche umfasst folgende Schritte:
(a) Drücken einer Folie auf die zu prüfende Oberfläche mit einem vorgegebenen Anpressdruck, wobei die Folie eine Relativbewegung, bezogen auf die Oberfläche, aufweist,
(b) Abziehen der Folie von der zu prüfenden Oberfläche,
(c) Bestimmen, ob an der Folie ein Teil des noch flüssigen oder weichen Beschichtungsmaterials haftet.
Durch das Andrücken der Folie auf die Oberfläche werden Verunreinigungen auf der Oberfläche oder auch Material der Beschichtung bei nicht vollständig ausgehärteter Beschichtung an die Folie übertragen. Wenn sich auf einer noch nicht vollständig ausgehärteten Beschichtung eine Haut gebildet hat, wird die Haut durch die Relativbewegung der Folie, die unter Druck ausgeübt wird, zur Seite gezogen und platzt auf. Das unter der Haut vorliegende noch nicht ausgehärtete, flüssige oder weiche Beschichtungsmaterial kann austreten und wird auf die Folie übertragen. Durch die Bestimmung, ob an der Folie Verunreinigungen haften, lässt sich erkennen, ob sich auf die Folie durch das Aufdrücken auf die Beschichtung Lack übertragen hat. Zur Bestimmung, ob an der Folie Verunreinigungn haften, kann die Folie zum Beispiel mit einer Lichtquelle durchleuchtet werden. Das durch die Folie hindurchscheinende Licht kann zum Beispiel mit einem Photodetektor erfasst werden. Wenn Material auf die Folie übertragen wurde, ändert sich die Intensität des durchscheinendes Lichtes. Alternativ ist es auch möglich. Ultraschallverfahren oder andere optische Verfahren, zum Beispiel Kamerasysteme einzusetzen, um zu bestimmen, ob Verunreinigungen an der Folie haften.
Vorteil des erfindungsgemäßen Verfahrens ist es, dass dieses unabhängig ist von einer Beurteilung durch einen Prüfer. Zudem lässt sich das Verfahren, wenn jeweils ein neues, sauberes Stück Folie für eine neue Beschichtungsprobe verwendet wird, automatisieren.
In einer bevorzugten Ausführungsform wird die Folie von einem Folienvorrat abgezogen und nach der Bestimmung in Schritt (c) für eine Entsorgung gesammelt. Durch das Abziehen der Folie von einem Folienvorrat steht für jede zu prüfende Beschichtung ein neues, sauberes Stück Folie zur Verfügung. Eine Automatisierung des Verfahrens ist somit möglich. Als Folienvorrat eignet sich zum Beispiel eine Rolle, auf die die Folie aufgewickelt ist. Das Sammeln der Folie zur Entsorgung erfolgt vorzugsweise dadurch, dass die Folie auf eine Rolle aufgewickelt wird. Der Transport der Folie erfolgt vorzugsweise dadurch, dass die Rolle, auf die die Folie aufgewickelt wird, von einem Motor angetrieben wird.

Weiterhin ist es jedoch auch möglich, dass die Folie eine Endlosfolie ist, die mindestens zwei Rollen umläuft, von denen mindestens eine angetrieben ist, wobei die Folie nach dem Durchleuchten in Schritt (c) und vor dem erneuten Aufdrücken auf die Oberfläche der Beschichtung gereinigt wird. Vorteil der Verwendung einer Endlosfolie ist, dass keine verunreinigte Folie zur Entsorgung anfällt. Bevorzugt ist jedoch, dass eine Folie verwendet wird, die nach der Bestimmung in Schritt (c) für eine Entsorgung gesammelt wird, da durch Reinigungsverfahren Rückstände auf der Folie verbleiben können, eine Reinigung gegebenenfalls nicht möglich ist oder die Folie geschädigt werden könnte.

Die Beschichtung, die mit dem erfindungsgemäßen Verfahren geprüft wird, kann zum Beispiel eine Farbe oder ein farbiger Lack sein. Weiterhin ist es auch möglich, dass die Beschichtung ein Klarlack ist. Das heißt, dass sich das Verfahren sowohl für deckende, pigmentierte als auch für transparente Stoffe mit oder ohne darin enthaltenen Farbstoffen eignet. Die Farbigkeit der Beschichtung ist für die Durchführung des Verfahrens nicht ausschlaggebend.

Wenn die Beschichtung eine Farbe oder ein farbiger Lack ist, ist die Folie in einer Ausführungsform klar und transparent. Wenn Verunreinigungen oder nicht ausgehärtetes Beschichtungsmaterial an die Folie übertragen werden, nimmt deren Lichtdurchlässigkeit ab, falls das Licht zum Beispiel durch Pigmente gestreut oder absorbiert und damit abgeschwächt wird. Wenn die Bestimmung, ob Verunreinigungen auf der Folie enthalten sind, durch Durchleuchten der Folie und Erfassen des durchscheinenden Lichtes erfolgt, führt dies zu einer Abnahme der durch den Photodetektor detektierten Lichtintensität.

Alternativ ist es auch möglich, eine opake und/oder lichtstreuende Folie zu verwenden. Hierzu ist die Folie zum Beispiel mit einem matten Klarlack beschichtet. Auch bei einer opaken und/oder lichtstreuenden Folie wird bei Benetzung mit Verschmutzungen oder Beschichtungsmaterial nach dem Aufdrücken der Folie auf die Oberfläche die Intensität des durchscheinenden Lichtes reduziert.

Wenn die Beschichtung ein Klarlack ist, wird vorzugsweise eine opake und/oder lichtstreuende Folie verwendet. Bei Benetzung der opaken und/oder lichtstreuenden Folie mit einer klaren Flüssigkeit, wie dies zum Beispiel nicht ausgehärteter Klarlack ist, nimmt die Intensität des durchscheinenden Lichtes zu, da die Streuung des Lichts durch die matte Oberfläche der Folie durch den Überzug mit der klaren Flüssigkeit abnimmt. Dies lässt sich ebenfalls durch den Photodetektor erkennen.
Um das erfindungsgemäße Verfahren automatisiert durchführen zu können, wird in einer bevorzugten Ausführungsform eine Oberfläche als nicht in Ordnung gekennzeichnet, wenn sich die Transmission des Lichtes durch die Folie um mindestens einen vorgegebenen Betrag ändert. Um zu vermeiden, dass produktionsbedingte Transmissionsabweichungen der Folie dazu führen, dass Oberflächen, die in Ordnung sind, als fehlerhaft gekennzeichnet werden, beträgt der vorgegebene Betrag der Änderung in der Transmission zum Beispiel mindestens 5 %. Produktionsbedingte Transmissionsänderungen der Folie können zum Beispiel durch Schwankungen in der Foliendicke auftreten. Vorzugsweise kann der Sensor auf die engesetzte Folie kalibriert werden.
Bevorzugt gibt es weiterhin eine Vorrichtung zur Durchführung des erfindungsgemäßen Verfahrens, die nicht zur Erfindung gehört, wobei die Vorrichtung mindestens eine Folie, die gegen eine Oberfläche gedrückt werden kann, mindestens eine Anpressrolle mit einer Oberfläche, mit der die Folie gegen die zu prüfende Oberfläche gedrückt wird und mindestens eine Vorrichtung zur Bestimmung, ob die Folie Verschmutzungen aufweist umfasst. In einer Ausführungsform umfasst die Vorrichtung zur Bestimmung, ob die Folie Verschmutzungen aufweist, mindestens eine Lichtquelle und mindestens einen Photodetektor, wobei die Lichtquelle und der Photodetektor so angeordnet sind, dass die Folie nach dem Abziehen von der zu prüfenden Oberfläche zwischen der Lichtquelle und dem Photodetektor hindurchgeführt wird.
In einer Ausführungsform ist die Oberfläche der Anpressrolle glatt oder profiliert. Bevorzugt ist die Anpressrolle profiliert. Durch die Profilierung ist ein strukturierter Übertrag möglich, wodurch die Detektion von schwierig zu erkennenden Stoffen erleichtert wird. Auch wird durch Verwendung einer profilierten Anpressrolle eine stabile Haut, die sich auf einem noch nicht ausgehärteten, flüssigen oder weichen Beschichtungsmaterial ausgebildet hat, leichter aufgerissen.
Das Material der Anpressrolle kann hart oder weich sein, um eine größere oder kleiner Anpressfläche zu erzielen. Ein hartes Material führt dabei zu einer kleineren und ein weiches Material zu einer größeren Anpressfläche. Bei stark klebenden Oberflächen ist eine kleine Anpressfläche, bei sehr flüssigen Oberflächen eine große Anpressfläche bevorzugt, um den Übertrag auf die Folie zu verstärken und die Haftkraft zu begrenzen.
Um das Verfahren automatisiert durchführen zu können, ist die Folie vorzugsweise auf einer Rolle bevorratet, von der diese abgewickelt werden kann. Vorzugsweise umfasst die Vorrichtung weiterhin eine Rolle, auf die die Folie nach dem Durchleuchten aufgewickelt wird.
Alternativ ist es auch möglich, dass die Folie eine Endlosfolie ist, die zumindest die Anpressrolle und eine weitere Rolle umläuft. Wenn eine Endlosfolie eingesetzt wird, ist es bevorzugt, dass die Vorrichtung weiterhin eine Reinigungsvorrichtung umfasst, in der die Folie nach dem Durchleuchten gereinigt und gegebenenfalls getrocknet werden kann. Durch das Reinigen der Folie nach dem Durchleuchten werden übertragene Verschmutzungen oder Beschichtungsreste nicht auf eine erneute Probe übertragen oder als Verschmutzung einer weiteren Probe gewertet.
Weiterhin umfasst die Vorrichtung in einer bevorzugten Ausführungsform eine Auswerteeinheit, die mit der Vorrichtung zur Bestimmung, ob an der Folie Verunreinigungen haften, verbunden ist, um eine automatisierte Auswertung durchführen zu können.

### Kurze Beschreibung der Zeichnungen

Ausführungsbeispiele der Erfindung sind in den Zeichnungen dargestellt und in der nachfolgenden Beschreibung näher erläutert.
Es zeigen
- Figur 1: einen Aufbau einer Messvorrichtung, die nicht zur Erfindung gehört.

- Figur 2: eine Differenz aus Messwert einer sauberen und einer verunreinigten Folie in einem Balkendiagramm,
- Figur 3: eine Transmissionsänderung bei Beschichtungen mit unterschiedlichem Aushärtungsgrad in einem Balkendiagramm.

### Ausführungsformen der Erfindung

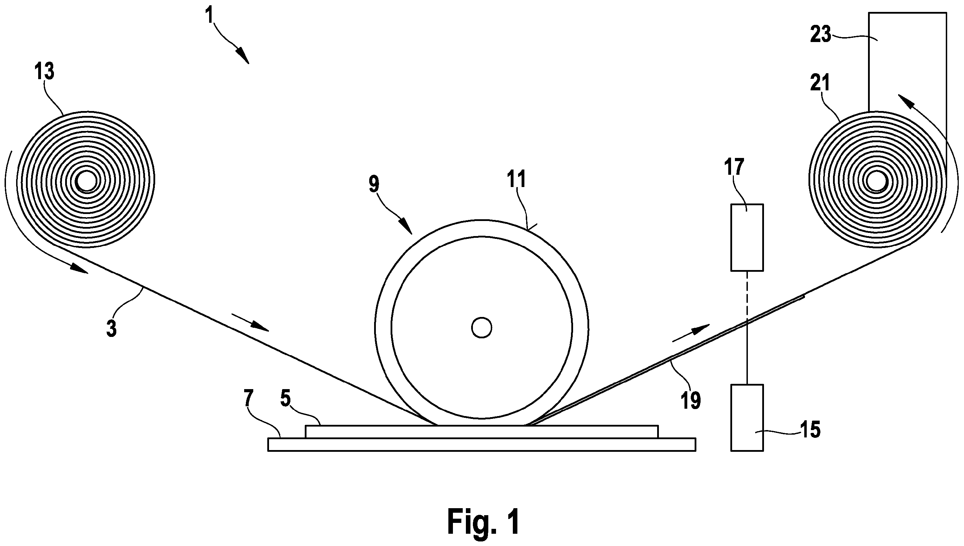

In Figur 1 ist ein Aufbau einer Messvorrichtung dargestellt.

Eine Messvorrichtung 1 umfasst eine Folie 3, die gegen eine zu prüfende Oberfläche eines Substrates 7 gedrückt wird. Die zu prüfende Oberfläche kann zum Beispiel eine Beschichtung 5 mit einer Farbe, ein farbiger Lack oder auch ein Klarlack sein. Weiterhin kann auch eine unbeschichtete zu prüfende Oberfläche mit der Messvorrichtung 1 geprüft werden. Als Material für das Substrat werden zum Beispiel Metalle, Kunststoffe. Glas. Holz usw. eingesetzt. Das Material des Substrates ist dabei davon abhängig, für welche Anwendung das Beschichtungsmaterial verwendet werden soll. Das Andrücken der Folie 3 auf die zu prüfende Oberfläche erfolgt mit Hilfe einer Anpressrolle 9. Die Anpressrolle 9 ist dabei mit einer Oberfläche 11 versehen, die glatt oder profiliert ausgeführt sein kann. Bevorzugt ist die Oberfläche 11 der Anpressrolle 9 profiliert ausgeführt.

Die Folie 3 ist vorzugsweise auf einer Rolle 13 bevorratet. Durch Abwickeln der Folie 3 von der Rolle 13 wird sichergestellt, dass für jede zu prüfende Oberfläche ein neues Stück der Folie 3 verwendet wird. Durch die Verwendung eines jeweils neuen Stückes der Folie 3 entfällt der Reinigungsaufwand und es ist ein schneller, prozesssicherer automatischer Probenwechsel möglich. Als Probe im Sinne der vorliegenden Erfindung wird das Substrat 7 mit der darauf ausgebildeten Beschichtung 5 bezeichnet. Nachdem die Folie 3 auf die Oberfläche aufgedrückt wurde, wird diese von einer Lichtquelle 15 durchleuchtet. Das von der Lichtquelle 15 abgestrahlte Licht, das durch die Folie durchscheint, wird von einem Photodetektor 17 empfangen. Wenn die zu prüfende Oberfläche eine Beschichtung 5 ist, die noch nicht vollständig ausgehärtet ist, sich eine trockene Haut auf einer noch nicht vollständig ausgehärteten Beschichtung 5 ausgebildet hat oder die zu prüfende Oberfläche verschmutzt ist, wird Beschichtungsmaterial oder ein Teil der Verschmutzungen von der zu prüfenden Oberfläche auf die Folie 3 übertragen. Hierdurch bildet sich auf der Folie 3 ein Film 19 aus. Durch den Film 19 wird das durch die Folie 3 durchscheinende Licht, das von der Lichtquelle 15 abgestrahlt wird, gedämpft. Die vom Photodetektor 17 empfangene Lichtintensität ist somit bei Vorliegen eines Films 19 auf der Folie 3 geringer. Hierdurch lässt sich somit erkennen, ob die Beschichtung 5 nicht vollständig ausgehärtet oder verschmutzt ist. Anstelle der Lichtquelle 15 und des Photodetektors 17 kann auch jede weitere Vorrichtung eingesetzt werden, mit der ermittelt werden kann, ob sich von der zu prüfenden Oberfläche auf die Folie 3 Verunreinigungen übertragen haben. Geeignete Messvorrichtungen sind zum Beispiel optische Systeme, bei der die Verunreinigungen mit einer Kamera erfasst werden oder auch Ultraschallverfahren.

Nach der Bestimmung, ob auf der Folie 3 Verunreinigungen enthalten sind, wird die Folie 3 auf eine zweite Rolle 21 aufgewickelt. Die zweite Rolle 21 kann zum Beispiel durch einen Motor 23 angetrieben werden.

Um zu prüfen, ob die Beschichtung 5 nicht vollständig ausgehärtet ist oder auf der Beschichtung 5 bzw. der zu prüfenden unbeschichteten Oberfläche flüssige oder schmierende Verunreinigungen enthalten sind, wird das Substrat 7 mit der zu prüfenden Oberfläche unterhalb der Anpressrolle 9 positioniert. Mit der Anpressrolle 9 wird die Folie 3 auf die zu prüfende Oberfläche gedrückt. Mit Hilfe des Motors 23 wird ein Stück der Folie 3 auf die zweite Rolle 21 aufgewickelt. Hierbei wird die Folie 3 über die zu prüfende Oberfläche gezogen, wodurch die Folie 3 eine Relativbewegung gegenüber der zu prüfenden Oberfläche aufweist. Die Relativgeschwindigkeit zwischen der zu prüfenden Oberfläche und der Folie 3 kann zum Beispiel dadurch erreicht werden, dass das Substrat 7 mit der zu prüfenden Oberfläche fest eingespannt wird, während die Folie 3 bewegt wird, weiterhin ist es möglich, dass das Substrat mit der zu prüfenden Oberfläche und die Folie 3 mit unterschiedlichen Geschwindigkeiten bewegt werden, oder es ist möglich, dass das Substrat 7 mit der zu prüfenden Oberfläche unter der Folie 3 hindurchgezogen wird, wobei sich die Folie 3 nicht bewegt. Bevorzugt wird jedoch das Substrat 7 mit der zu prüfenden Oberfläche eingespannt und die Folie 3 über die zu prüfende Oberfläche bewegt. Wenn auf der zu prüfenden Oberfläche eine Beschichtung 5 aufgetragen ist, die nicht vollständig ausgehärtet ist, wenn sich eine Haut auf der Beschichtung 5 ausgebildet hat und das Beschichtungsmaterial unter der Haut noch flüssig oder weich ist, oder wenn die zu prüfende Oberfläche verunreinigt ist, bleibt ein Teil der Verunreinigungen oder des noch flüssigen oder weichen Beschichtungsmaterials an der Folie 3 als Film 19 haften. Nach dem Abziehen der Folie 3 von der zu prüfenden Oberfläche kann die Folie 3 mit dem gegebenenfalls daran haftenden Film 19 von der Lichtquelle 15 durchleuchtet werden. Das durch die Folie 3 und gegebenenfalls den Film 19 durchscheinende Licht wird von dem Photodetektor 17 empfangen. Als Vergleichswert dient der Transmissionswert für eine Folie 3, auf der kein Film 19 haftet. Wenn ein Film 19 auf der Folie 3 haftet, ändert sich der vom Photodetektor empfangene Wert. Hierdurch lässt sich erkennen, ob die Beschichtung 5 in Ordnung ist oder nicht. Wie oben bereits dargelegt kann anstelle der Lichtquelle 15 und dem Photodetektor 17 auch jede weitere geeignete Messvorrichtung eingesetzt werden, mit der erkannt werden kann, ob auf der Folie 3 Verunreinigungen enthalten sind.

Nachdem die Oberfläche geprüft wurde, wird das Substrat 7 mit der zu prüfenden Oberfläche entfernt, und es ist möglich, ein nächstes Substrat 7 mit einer weiteren zu prüfenden Oberfläche unterhalb der Anpressrolle 9 zu platzieren. Wenn der Photodetektor 17 mit einer Auswerteeinheit verbunden ist, lässt sich so das Verfahren zur Prüfung der Oberfläche automatisieren.

Nicht vollständig ausgehärtete Beschichtungen 5 oder verschmutzte Oberflächen lassen sich durch das erfindungsgemäße Verfahren vollautomatisch aussortieren. Ein weiterer Vorteil ist, dass lediglich ein kleiner Messfleck auf der Beschichtung 5 entsteht und Proben, die in Ordnung sind, nicht beschädigt werden. Aus diesem Grund ist eine Weiterverwendung der untersuchten Proben, wenn diese in Ordnung sind, uneingeschränkt möglich.

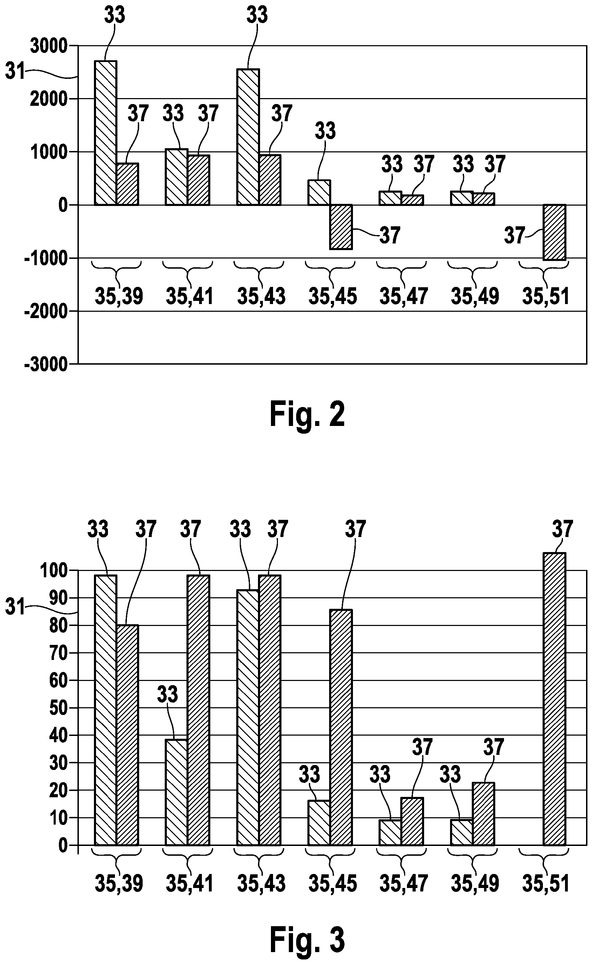

Figur 2 zeigt eine Differenz des Messwertes einer sauberen zu einer verunreinigten Folie in einem Balkendiagramm. Die Differenz ist auf der y-Achse 31 aufgetragen. In Figur 2 ist jeweils vergleichend eine klare, transparente und eine opake Folie dargestellt.

In Figur 2 zeigt ein erstes Balkenpaar 39 die Differenz des Messwertes einer sauberen von der einer verunreinigten Folie für eine klare, transparente Folie im linken Balken 33 und eine opake Folie im rechten Balken 37 für einen UV-aushärtenden, gelben Lack, der flüssig an die Folie übertragen wird. Der Film 19, der sich auf der Folie 3 ausbildet, ist dabei farbig. Im zweiten Balkenpaar 41 ist die Differenz des Messwertes einer sauberen und einer verunreinigten Folie für einen UV-aushärtenden, gelben Lack aufgetragen, bei dem sich eine Haut ausgebildet hat, unter der noch nicht ausgehärteter flüssiger, beziehungsweise weicher Lack enthalten ist. Ein drittes Balkenpaar 43 zeigt in Figur 2 die Differenz des Messwertes einer sauberen und einer verunreinigten Folie für einen gelben UV-aushärtenden Lack mit Haut, wobei die Haut mechanisch verletzt wurde. Der unter der Haut enthaltene noch nicht ausgehärtete Lack wurde als farbiger Film 19 an die Folie 3 übertragen. Das vierte Balkenpaar 45 zeigt die Differenz des Messwertes einer sauberen und einer verunreinigten Folie für einen Einbrenn-Klarlack, der angetrocknet ist. Der angetrocknete Einbrenn-Klarlack ist noch klebrig. Es gibt einen klaren, strukturierten Übertrag an die Folie. Hierbei zeigt sich, dass die Transmission des Lichtes bei einer klaren, transparenten Folie abnimmt, wohingegen die Transmission für eine opake Folie zunimmt.

Das fünfte Balkenpaar 47 zeigt die Differenz des Messwertes der sauberen und der verunreinigten Folie für einen UV-aushärtenden Klarlack, der ebenfalls noch klebrig ist, wobei sich ein trüber Film 19 auf der Folie 3 ausbildet. Das sechste Balkenpaar 49 zeigt die Differenz für einen zweiten UV-aushärtenden Klarlack. Im siebten Balkenpaar 51 ist die Differenz für einen flüssigen, UV-aushärtenden Klarlack dargestellt, wobei ein klarer Film 19 entsteht. Aufgrund des klaren Films 19 ändert sich die Durchlässigkeit der Folie 3 für das Licht bei Verwendung einer klaren, transparenten Folie nicht. Bei einer opaken Folie wird die Durchlässigkeit des Lichtes verbessert.

Aus Figur 2 geht hervor, dass sowohl für klare, transparente Folien als auch für eine opake Folie bei farbigen Lacken die vom Photodetektor 17 aufgenommene Lichtintensität bei einer Ausbildung eines farbigen Filmes 19 auf der Folie 3 abnimmt. Die Abnahme der Intensität ist dabei wesentlich größer als die Abnahme der Intensität bei einem trüben Film 19, der bei einem noch nicht vollständig ausgehärteten Klarlack auf der Folie 3 entsteht. Wenn sich bei der Untersuchung eines Klarlackes ein klarer Film auf der Folie 3 ausbildet, nimmt die Lichtintensität, die durch den Photodetektor 17 ermittelt wird, zu. Ein flüssiger Film eines Klarlackes lässt sich, wie im siebten Balkenpaar 51 zu sehen, mit einer klaren. transparenten Folie nicht ermitteln. Aus diesem Grund ist es notwendig, zum Prüfen von Klarlacken eine opake Folie zu verwenden.

Figur 3 zeigt die Transmissionsänderung in einem Balkendiagramm.

Im Unterschied zu Figur 2 ist in Figur 3 auf der y-Achse 31 die Transmissionsänderung in % aufgetragen. Die Proben, für die die sieben Balkenpaare 39, 41, 43, 45, 47, 49 und 51 die Transmissionsänderung jeweils darstellen, sind die gleichen wie in Figur 2. In Figur 3 ist zu erkennen, dass außer für den flüssigen, UV-aushärtenden Klarlack auch bei Verwendung einer klaren, transparenten Folie die Transmissionsänderung jeweils mindestens 9 % beträgt. Lediglich bei dem flüssigen, UV-aushärtenden Klarlack ändert sich die Transmission für die klare, transparente Folie nicht. Bei Verwendung einer opaken Folie lässt sich durch die jeweils rechten Balken 37 erkennen, dass die Transmissionsänderung jeweils größer als 15 % ist. Auch bei einem flüssigen, UV-aushärtenden Klarlack, der als flüssiger Film 19 an die Folie 3 übertragen wird, zeigt sich im siebten Balkenpaar 51 eine deutliche Transmissionsänderung. Aus diesem Grund ist es bevorzugt, für das erfindungsgemäße Verfahren eine opake Folie zu verwenden.

## Patentansprüche

1. Verfahren zur Erkennung von nicht vollständig ausgehärteten Beschichtungen (5) auf einer zu prüfenden Oberfläche, folgende Schritte umfassend:
(a) Drücken einer Folie (3) auf die zu prüfende Oberfläche mit einem vorgegebenen Anpressdruck, wobei die Folie (3) eine Relativbewegung, bezogen auf die zu prüfende Oberfläche, aufweist,
(b) Abziehen der Folie (3) von der zu prüfenden Oberfläche,
(c) Bestimmen, ob an der Folie (3) ein Teil des noch flüssigen oder weichen Beschichtungsmaterials haftet.

2. Verfahren nach Anspruch 1, **dadurch gekennzeichnet, dass** die Folie (3) von einem Folienvorrat abgezogen und nach dem Bestimmen, ob an der Folie (3) ein Teil des noch flüssigen oder weichen Beschichtungsmaterials haftet, in Schritt (c) für eine Entsorgung gesammelt wird.

3. Verfahren nach Anspruch 1, **dadurch gekennzeichnet, dass** die Folie (3) eine Endlosfolie ist, die mindestens zwei Rollen umläuft, von denen mindestens eine angetrieben ist, wobei die Folie (3) nach dem Durchführen von Schritt (c) und vor dem erneuten Aufdrücken auf eine zu prüfende Oberfläche gereinigt wird.

4. Verfahren nach einem der Ansprüche 1 bis 3, **dadurch gekennzeichnet, dass** die Beschichtung (5) eine Farbe oder ein farbiger Lack ist.

5. Verfahren nach Anspruch 4, **dadurch gekennzeichnet, dass** die Folie (3) klar und transparent ist.

6. Verfahren nach einem der Ansprüche 1 bis 4, **dadurch gekennzeichnet, dass** die Beschichtung (5) ein Klarlack ist.

7. Verfahren nach Anspruch 4 oder 6, **dadurch gekennzeichnet, dass** die Folie (3) opak und/oder lichtstreuend ist.

8. Verfahren nach einem der Ansprüche 1 bis 7, **dadurch gekennzeichnet, dass** zum Bestimmen, ob an der Folie (3)ein Teil des noch flüssigen oder weichen Beschichtungsmaterials haftet, in Schritt (c) die Folie (3) mit einer Lichtquelle (15) durchleuchtet wird und das durch die Folie (3) hindurchscheinende Licht mit einem Phototdetektor (17) erfasst wird.

9. Verfahren nach Anspruch 8, **dadurch gekennzeichnet, dass** eine zu prüfende Oberfläche als nicht in Ordnung gekennzeichnet wird, wenn sich die Transmission des Lichtes durch die Folie (3) um mindestens einen vorgegebenen Betrag ändert.

## Claims

1. Method for the detection of incompletely hardened coatings (5) on a surface to be checked, comprising the following steps:
(a) pressing a film (3) onto the surface to be checked with a predefined contact pressure, the film (3) having a relative movement in relation to the surface to be checked,
(b) pulling the film (3) off the surface to be checked,
(c) determining whether some of the still liquid or soft coating material is adhering to the film (3).

2. Method according to Claim 1, **characterized in that** the film (3) is drawn off a film supply and, following the determination as to whether some of the still liquid or soft coating material is adhering to the film (3), is collected in step (c) for disposal.

3. Method according to Claim 1, **characterized in that** the film (3) is a continuous film which runs around at least two rollers, of which at least one is driven, wherein the film (3) is cleaned following the performance of step (C) and before the renewed pressing onto a surface to be checked.

4. Method according to one of Claims 1 to 3, **characterized in that** the coating (5) is a paint or a coloured lacquer.

5. Method according to Claim 4, **characterized in that** the film (3) is clear and transparent.

6. Method according to one of Claims 1 to 4, **characterized in that** the coating (5) is a clear lacquer.

7. Method according to Claim 4 or 6, **characterized in that** the film (3) is opaque and/or light diffusing.

8. Method according to one of Claims 1 to 7, **characterized in that** in order to determine whether some of the still liquid or soft coating material is adhering to the film (3), in step (c) the film (3) is transilluminated by using a light source (15) and the light shining through the film (3) is detected by a photodetector (17).

9. Method according to Claim 8, **characterized in that** a surface to be checked is identified as not in order if the transmission of the light through the film (3) changes by at least a predefined amount.

## Revendications

1. Procédé pour reconnaître des revêtements (5) non complètement durcis sur une surface à contrôler, comprenant les étapes suivantes :
(a) application d'une feuille (3) sur la surface à contrôler avec une pression d'application prédéfinie, la feuille (3) présentant un mouvement relatif par rapport à la surface à contrôler,
(b) enlèvement de la feuille (3) à partir de la surface à contrôler,
(c) détermination indiquant si une partie du matériau de revêtement encore liquide ou souple adhère à la feuille (3).

2. Procédé selon la revendication 1, **caractérisé en ce que** la feuille (3) est enlevée d'une réserve de feuille et, une fois déterminé si une partie du matériau de revêtement encore liquide ou souple adhère à la feuille (3), est collectée dans l'étape (c) en vue d'une mise au rebut.

3. Procédé selon la revendication 1, **caractérisé en ce que** la feuille (3) est une feuille sans fin qui entoure au moins deux galets dont au moins un est entraîné, la feuille (3) étant nettoyée après la réalisation de l'étape (c) et avant une nouvelle application sur une surface à contrôler.

4. Procédé selon l'une des revendications 1 à 3, **caractérisé en ce que** le revêtement (5) est une peinture ou une laque colorée.

5. Procédé selon la revendication 4, **caractérisé en ce que** la feuille (3) est claire et transparente.

6. Procédé selon l'une des revendications 1 à 4, **caractérisé en ce que** le revêtement (5) est une laque claire.

7. Procédé selon la revendication 4 ou 6, **caractérisé en ce que** la feuille (3) est opaque et/ou disperse la lumière.

8. Procédé selon l'une des revendications 1 à 7, **caractérisé en ce que**, pour déterminer si une partie du matériau de revêtement encore liquide ou souple adhère à la feuille (3), la feuille (3) est éclairée dans l'étape (c) avec une source de lumière (15), et la lumière transparaissant à travers la feuille (3) est détectée avec un photodétecteur (17).

9. Procédé selon la revendication 8, **caractérisé en ce qu'**une surface à contrôler est **caractérisée** comme non conforme si la transmission de la lumière à travers la feuille (3) varie d'au moins une quantité prédéfinie.
